# EUROPÄISCHE PATENTSCHRIFT

(11) **EP 3 781 819 B1**
(45) Veröffentlichungstag und Bekanntmachung des Hinweises auf die Patenterteilung: **10.08.2022**
(21) Anmeldenummer: 19730724.2
(22) Anmeldetag: 06.06.2019
(51) Int. Cl.: F15B 1/02, B60G 17/056, F15B 13/044, F15B 13/04

(54) **STEUERVORRICHTUNG**
CONTROL DEVICE
DISPOSITIF DE COMMANDE

(30) Priorität: 13.06.2018 DE 102018004769
(43) Veröffentlichungstag der Anmeldung: 24.02.2021
(73) Patentinhaber: Hydac Mobilhydraulik GmbH, Sulzbach/Saar (DE)
(72) Erfinder: ANTON, Marc, 66333 Völklingen (DE)
(74) Vertreter: Bartels und Partner, Patentanwälte
(86) Internationale Anmeldenummer: PCT/EP2019/064849
(87) Internationale Veröffentlichungsnummer: WO 2019/238534

(56) Entgegenhaltungen:
- EP-A1- 2 466 154
- DE-A1- 19 909 712
- DE-U1- 8 804 060
- US-A1- 2014 352 524
- US-B2- 6 854 270

## Beschreibung

Die Erfindung betrifft eine Steuervorrichtung zum Ansteuern eines hydraulischen Verbrauchers. Insbesondere bezieht sich die Erfindung auf die Ansteuerung von Arbeitszylindern, die bei Fahrzeugen mit sich ändernden Lastverhältnissen und mit einem hydropneumatischen Federungssystem zur Niveauregelung einsetzbar sind.

Steuervorrichtungen sind Stand der Technik, siehe DE 10 2004 040 636 A1. Für die Versorgung des jeweiligen Arbeitszylinders in Form eines Federungszylinders sieht die bekannte Lösung zwei Leitungs-Hauptzweige vor, die an den Ringraum bzw. Kolbenraum des jeweiligen Arbeitszylinders in Form eines Federungszylinders angeschlossen sind. Für die gesteuerte Druckversorgung des jeweiligen Ring- und Kolbenraumes sind in den zwischen einem Pumpenanschluss und einem Tankanschluss verlaufenden Hauptzweigen drei Schaltventile, von denen eines elektromagnetisch betätigt ist, sowie ein Druckregelventil eingefügt. Die bekannte Lösung weist aufgrund des Einsatzes von vier Ventilen den Nachteil hoher Baukosten auf und erfordert zudem einen beträchtlichen Aufwand für die Betätigung mehrerer Ventile einschließlich der Ansteuerung zweier Ventilmagnete.

Die DE 199 09 712 A1 beschreibt eine Steuervorrichtung zum Ansteuern eines hydraulischen Verbrauchers, wie eines Arbeitszylinders, mit den Merkmalen im Oberbegriff von Anspruch 1 bestehend aus mindestens einem Steuerventil mit einem Steuerschieber, der mittels eines Elektromotors betätigbar in einem Ventilgehäuse längsverfahrbar geführt ist und der mittels einer Ansteuerelektronik ansteuerbar ist, die Eingangssignale von einer Sensoreinrichtung erhält, die zumindest einen Betriebszustand des Verbrauchers erfasst, wobei auf der Eingangsseite des Ventilgehäuses mindestens ein Druckversorgungs- und ein Rücklaufanschluss und auf der Ausgangsseite mindestens zwei Nutzanschlüsse für den hydraulischen Verbraucher sowie zwei Steueranschlüsse für den Anschluss hydraulisch entsperrbarer Ventile, insbesondere in Form von Rückschlagventilen, vorhanden sind, wobei ein Arbeitszylinder als hydraulischer Verbraucher eine in einem Zylindergehäuse verfahrbare Kolben-Stangeneinheit aufweist, die das Zylindergehäuse in einen Ringraum und einen Kolbenraum unterteilt und dass der Ringraum an einen der Nutzanschlüsse und der Kolbenraum an den anderen Nutzanschluss fluidführend anschließbar ist, wobei in einer Mittelstellung von einem Energiespeicher, wie einer Druckfeder, unterstützt alle Anschlüsse auf der Ausgangsseite des Ventilgehäuses von dem Druckversorgungsanschluss abgesperrt sind.

Weitere Steuervorrichtungen gehen aus der US 2014/0352524 A1, der DE 88 04 060 U1, der EP 2 466 154 A1 und der US 6 854 270 B2 hervor.

Ausgehend von diesem Stand der Technik stellt sich die Erfindung die Aufgabe, eine Steuervorrichtung der eingangs genannten Art zur Verfügung zu stellen, die sich, insbesondere bei einem Einsatz zum Ansteuern eines zur Niveauregelung dienenden Arbeitszylinders, durch eine kostengünstige Bauweise auszeichnet und mit geringem Steuerungsaufwand betreibbar ist.

Erfindungsgemäß ist diese Aufgabe durch eine Steuervorrichtung gelöst, die die Merkmale des Patentanspruches 1 in seiner Gesamtheit aufweist. Gemäß Anspruch 1 ist vorgesehen, dass beidseitig neben der Mittelstellung der Steuerschieber jeweils zwei weitere Steuerfunktionen ausübt, nämlich eine Schaltposition (+2) zum Einfahren der Kolbenstangeneinheit, eine Schaltposition (+1) zum Laden des Ringraums, eine Schaltposition (-1) zum Laden des Kolbenraums und eine Schaltposition (-2) zum Ausfahren der Kolbenstangeneinheit; und dass der Ringraum und der Kolbenraum an jeweils einen Hydrospeicher angeschlossen sind. Dadurch, dass die Funktionen dreier Schaltventile und eines Druckregelventils bei der Erfindung von einem elektromotorisch betätigbaren Schieberventil übernommen sind, verringert sich zum einen der Kostenaufwand für kostenintensive Bauteile. Da zum anderen lediglich der Elektromotor des Schieberventils anzusteuern ist und nicht drei unabhängige Ventile, einschließlich zweier Betätigungsmagnete, angesteuert werden müssen, vereinfacht sich auch der Steuerungsaufwand. Dies eröffnet auch die Möglichkeit, die Steuervorrichtung als Baueinheit mit integrierter Ansteuerelektronik zu realisieren. Der Verdrahtungsaufwand verringert sich dadurch auch gegenüber der bekannten Lösung.

Für die Ansteuerung einer Regelpumpe, die der Druckerzeugung für den Druckversorgungsanschluss dient, kann mit Vorteil auf der Eingangsseite des Ventilgehäuses zusätzlich zu den vorhandenen Anschlüssen ein Loadsensing-Anschluss vorhanden sein.

Bei besonders vorteilhaften Ausführungsbeispielen ist der den Steuerschieber des Steuerventils betätigende Elektromotor ein bürstenloser Gleichstrommotor, der mittels eines Zahnstangentriebes den Steuerschieber betätigt. Mit Vorteil kann die elektromotorische Betätigung des Steuerschiebers in der Bauweise ausgeführt sein, wie es in DE 10 2015 015 685 A1 für den Steuerschieber eines LS-Wegeventils aufgezeigt ist. In Entsprechung zu dieser Lösung ist bei einem vorteilhaften Ausführungsbeispiel der Erfindung der Elektromotor am Ventilgehäuse derart angeordnet, dass seine Antriebsachse die Verfahrachse des Steuerschiebers senkrecht schneidet und sich ein am Ende der Motorwelle befindliches Zahnritzel innerhalb einer Gehäusekammer im Eingriff mit einer Zahnstange befindet, die mit dem Steuerschieber verbunden ist. Für die Steuerung des Schrittmotors ist, wie in dem genannten Dokument aufgezeigt, am Motorgehäuse ein Elektronikgehäuse angebracht, in der eine Elektronikplatine aufgenommen ist. Diese kann einen digitalen Controller aufweisen, der die Drehposition des Motors erkennt, beispielsweise durch eine sensorlose Positionsmessung. Die Ansteuerung kann über einen CAN-Bus erfolgen.

Die für die Erfassung von Betriebszuständen des Verbrauchers vorgesehene Sensoreinrichtung kann zumindest einen Sensor aufweisen, der der Wegerfassung und/oder der Geschwindigkeitserfassung und/oder der Druckwerterfassung dient.

Mit Vorteil kann die Sensoreinrichtung zwei Drucksensoren aufweisen, die einmal den Druck im Ringraum und einmal den Druck im Kolbenraum erfassen.

Nachstehend ist die Erfindung anhand eines in der Zeichnung dargestellten Ausführungsbeispieles im Einzelnen erläutert. Es zeigen:
- Fig. 1: in Symboldarstellung den Hydraulikschaltplan des Ausführungsbeispieles der erfindungsgemäßen Steuervorrichtung;
- Fig. 2: einen Längsschnitt des Steuerventils des Ausführungsbeispieles mit zugeordneter elektromotorischer Betätigungseinheit;
- Fig. 3a bis 3e: das jeweils gesondert dargestellte Steuerventil, wobei fünf unterschiedlichen Steuerfunktionen entsprechende Stellungen des Steuerschiebers gezeigt sind;
- Fig. 4: einen gegenüber Fig. 2 vergrößert gezeichneten Teillängsschnitt des Ventilgehäuses ohne zugehörige Betätigungseinheit, wobei sich der Steuerschieber in der Position "Senken" befindet; und
- Fig. 5 bis 8: der Fig. 4 entsprechende Darstellungen, wobei sich der Steuerschieber in den Positionen "Laden Ringraum" bzw. "Mittelstellung" bzw. "Laden Kolbenraum" bzw. "Heben" befindet.

Unter Bezugnahme auf die beigefügte Zeichnung ist die erfindungsgemäße Steuervorrichtung am Beispiel der Ansteuerung eines hydraulischen Verbrauchers in Form eines Federungszylinders 2 erläutert, der Bestandteil der Niveauregelung eines Fahrzeugs ist und dessen Kolbenstange 4 im Fahrbetrieb mit wechselnden Achslasten belastet ist. Die erfindungsgemäße Steuervorrichtung eignet sich gleichermaßen für die Ansteuerung von hydraulischen Verbrauchern für andere Einsatzzwecke. Für die Funktion als Federungselement ist der Zylinder 2 mit seinem stangenseitigen Ringraum 6 in Verbindung mit einem Hydrospeicher 8 und mit seinem Kolbenraum 10 mit einem Hydrospeicher 12 verbunden. Die Druckversorgung des Ringraums 6 erfolgt über einen ersten Leitungs-Hauptzweig 14, und die Druckversorgung des Kolbenraumes 10 erfolgt über einen zweiten Leitungs-Hauptzweig 16, über die jeweils eine Verbindung zur Ausgangsseite eines Steuerventils 18 herstellbar ist.

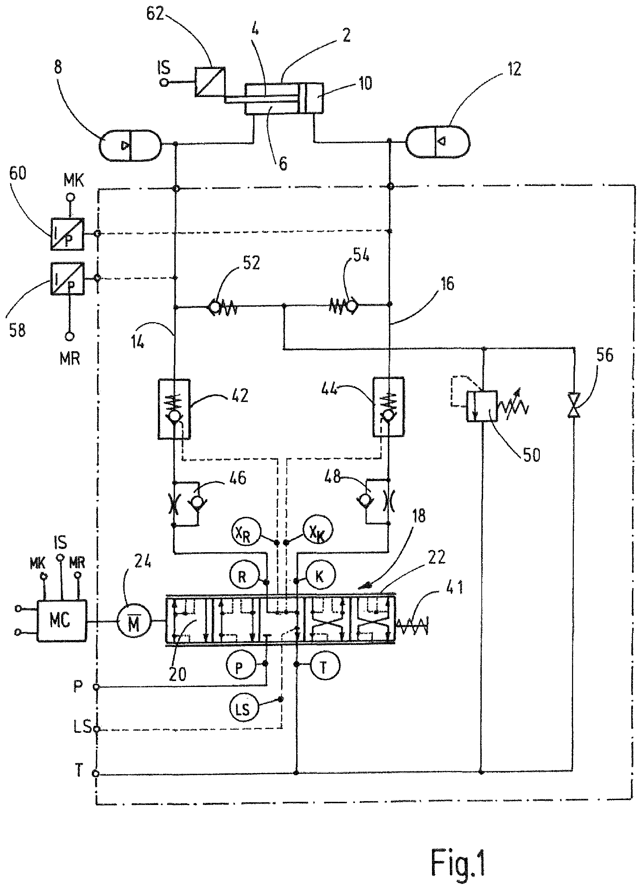

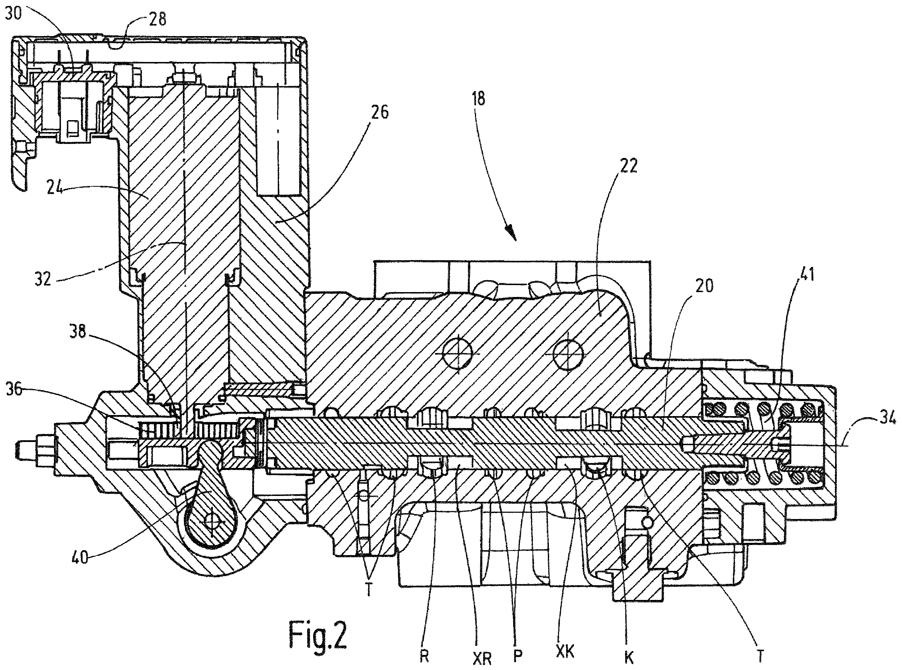

Bei dem Steuerventil 18 handelt es sich um ein Proportional-Schieberventil, dessen Steuerschieber 20 in einem Ventilgehäuse 22 mittels eines Elektromotors 24 längsverfahrbar ist. Im großen Ganzen entspricht die Bauweise des Schieberventils und seiner elektromotorischen Betätigung, wie sie in Fig. 2 dargestellt ist, der Bauweise der in dem bereits erwähnten Dokument DE 10 2015 015 685 A1 aufgezeigten Ventilvorrichtung, worauf Bezug genommen wird. Bei dem Elektromotor 24 handelt es sich um einen bürstenlosen Gleichstrommotor, fachsprachlich brushless-direct-current-motor, der als Schrittmotor von einem digitalen Controller MC (Fig. 1) angesteuert ist. Der Controller ist in das Motorgehäuse 26 integriert, das hierfür einen ein Elektronikgehäuse 28 bildenden Ansatz aufweist, in dem sich die Schaltungsplatine 30 des Controllers MC befindet. Dieser erkennt die Drehposition des Motors 24, beispielsweise durch eine sensorlose Positionsmessung (Rotorlagebestimmung durch die Motorwicklung). Die Ansteuerung kann von der Bordelektronik des zugehörigen Fahrzeuges her über einen CAN-Bus oder ein analoges Eingangssignal erfolgen.

Wie Fig. 2 zeigt, ist das Motorgehäuse 26 am in Fig. 2 links gelegenen Ende des Ventilgehäuses 22 derart angeflanscht, dass die Antriebsachse 32 des Motors 24 zur Verfahrachse 34 des Steuerschiebers 20 senkrecht verläuft und dass sich dieser mit seinem in Fig. 2 links gelegenen Endbereich in das Motorgehäuse 26 hinein erstreckt. An diesem Endbereich ist eine Zahnstange 36 am Steuerschieber 20 angebracht, mit der ein auf der Antriebsachse 32 sitzendes Zahnritzel 38 kämmt. Mit diesem Endbereich des Steuerschiebers 20 wirkt auch ein Betätigungsteil 40 einer Nothandbetätigung zusammen, die, da der elektromotorische Antrieb praktisch keine Selbsthemmung besitzt, von einfacher Bauweise sein kann. Eine am entgegengesetzten Ende am Steuerschieber 20 angreifende Druckfeder 41 gibt für den Schieber 20 eine in Fig. 2 dargestellte Mittelstellung vor.

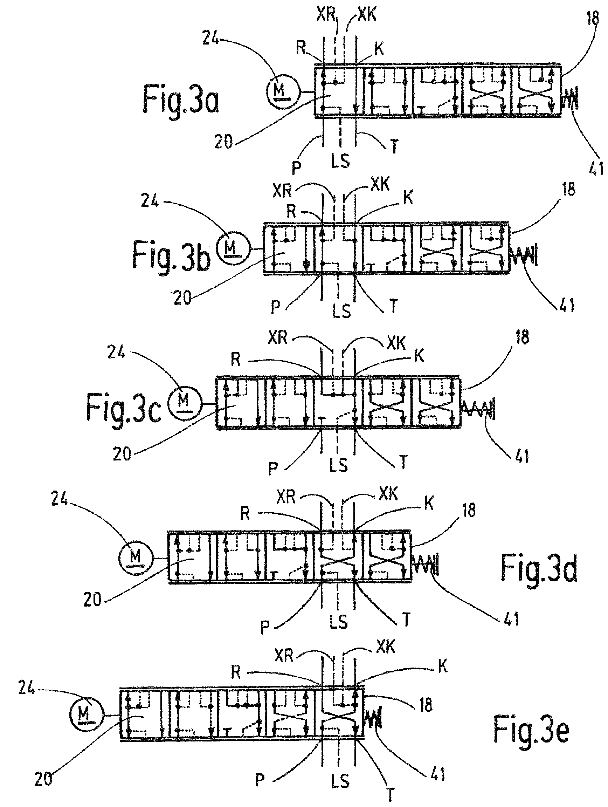

Wie am deutlichsten den Fig. 1 und 3a, bis 3e entnehmbar ist, weist das Ventilgehäuse 22 auf der Eingangsseite einen Druckversorgungsanschluss P, einen Rücklaufanschluss T sowie einen Loadsensing-Anschluss LS auf. An der Ausgangsseite befinden sich zwei Nutzanschlüsse R und K für die Versorgung des Zylinders 2 über die Leitungs-Hauptzweige 14 und 16. Ferner befinden sich an der Ausgangsseite Steueranschlüsse XR und XK, die für das hydraulische Entsperren von entsperrbaren Rückschlagventilen 42 und 44 vorgesehen sind, von denen das Rückschlagventil 42 in den ersten Hauptzweig 14 und das Rückschlagventil 44 in den zweiten Hauptzweig 16 eingefügt ist. Außerdem sind in den Hauptzweig 14 ein Drosselrückschlagventil 46 und in den Hauptzweig 16 ein Drosselrückschlagventil 48 eingefügt. Sowohl die entsperrbaren Rückschlagventile 42 und 44 als auch die Drosselrückschlagventile 46 und 48 sind jeweils in Richtung zum Steuerventil 18 sperrend. Beide Hauptzweige 14 und 16 sind gegen Überdruck zum Rücklaufanschluss T hin durch ein Druckbegrenzungsventil 50 abgesichert, das an die Hauptzweige 14 und 16 über Rückschlagventile 52 und 54 angeschlossen ist, die jeweils in Richtung zum Druckbegrenzungsventil 50 öffnen. Vervollständigt wird die hydraulische Schaltung durch ein Ablassventil 56, das zwischen Druckseite des Druckbegrenzungsventils 50 und dem Rücklaufanschluss T eingeführt ist.

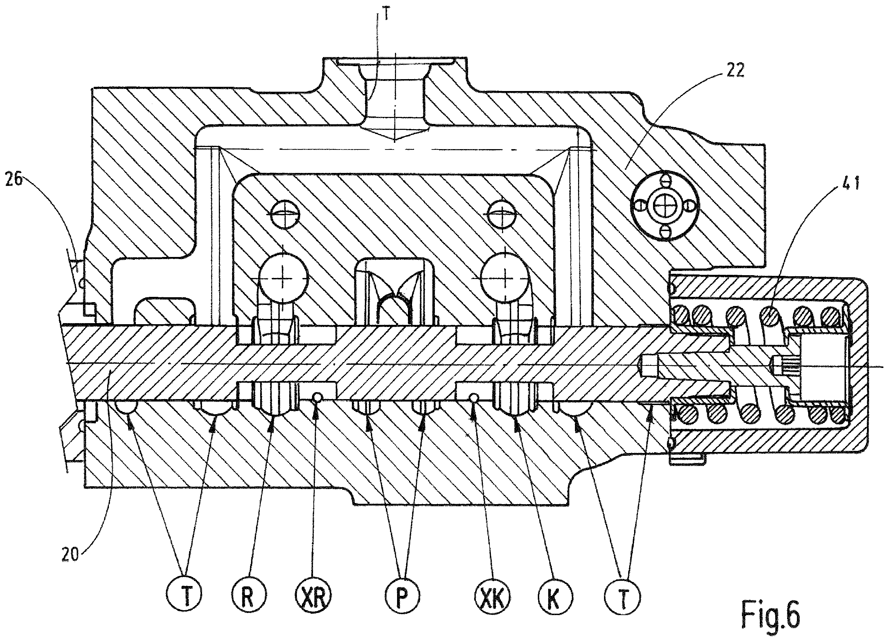

Im Betrieb erhält der Controller MC für die Einstellung des Steuerventils 18 auf die Schaltpositionen von einem Drucksensor 58 ein den Druck im Ringraum 6 darstellendes Drucksignal MR und von einem Drucksensor 60 ein den Druck im Kolbenraum 10 darstellendes Drucksignal MK. Ein Wegsensor 62 am Zylinder 2 liefert ein Positionssignal IS. Nach Maßgabe der Eingangssignale ist der Steuerschieber 20 neben der Mittelstellung beidseitig auf jeweils zwei weitere Schaltpositionen einstellbar, die in den Fig. 3a bis 3e sowie Fig. 4 bis 8 jeweils einzeln dargestellt sind. Von diesen zeigen die Fig. 3c und 6, wie auch die Fig. 1, die Mittelstellung. In dieser ist der Druckversorgungsanschluss P auf der Eingangsseite abgesperrt, während sämtliche übrigen Anschlüsse von Eingangsseite und Ausgangsseite mit dem Rücklaufanschluss T in Verbindung sind. Da die Steueranschlüsse XR und XK somit drucklos sind und die entsperrbaren Rückschlagventile 42 und 44 dadurch nicht entsperrt sind, sind die Hauptzweige 14 und 16 abgesperrt, so dass Ringraum 6 und Kolbenraum 10 des Zylinders lediglich mit dem Speicher 8 bzw. 12 verbunden sind, so dass der Zylinder 2 lediglich die Federfunktion ausübt.

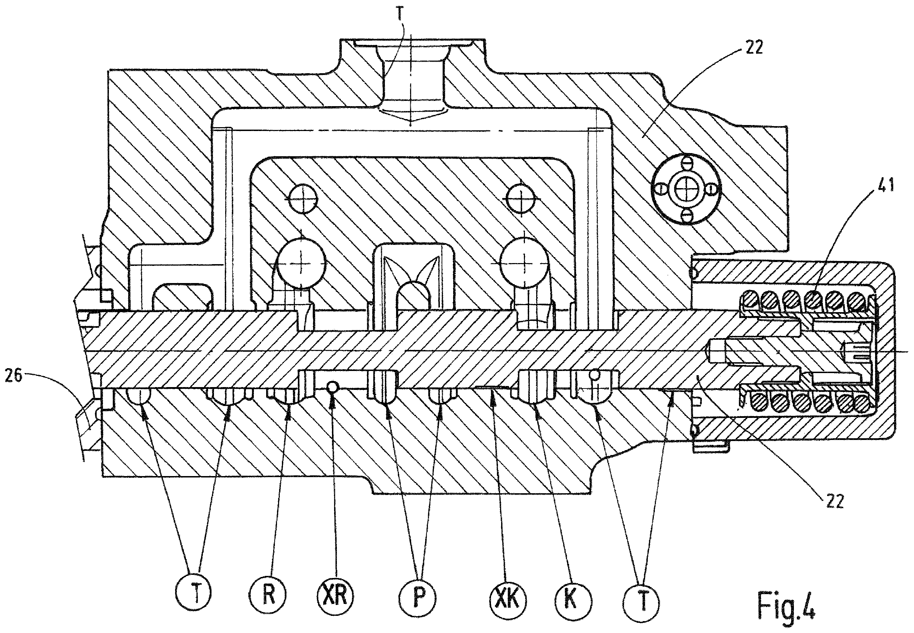

Die Fig. 3a und 4 zeigen die aus der Mittelstellung um zwei Schritte nach rechts verschobene Schaltposition des Steuerschiebers 20. Bei dieser mit +2 bezeichneten Position ist der ausgangsseitige Nutzanschluss K mit dem Rücklaufanschluss T verbunden, während sämtliche übrigen Anschlüsse mit dem Druckversorgungsanschluss P in Verbindung sind. Da beide Steueranschlüsse XR und XK druckführend sind, sind die Rückschlagventile 42 und 44 entsperrt. Der Ringraum 10 ist über den zweiten Hauptzweig 16 und das Drosselrückschlagventil 48 gedrosselt mit dem Rücklauf verbunden, während der Ringraum 6 des Zylinders über das Drosselrückschlagventil 46 und das entsperrte Rückschlagventil 42 mit dem Druckversorgungsanschluss P in Verbindung ist, so dass die Schaltposition +2 der Funktion "Senken" entspricht.

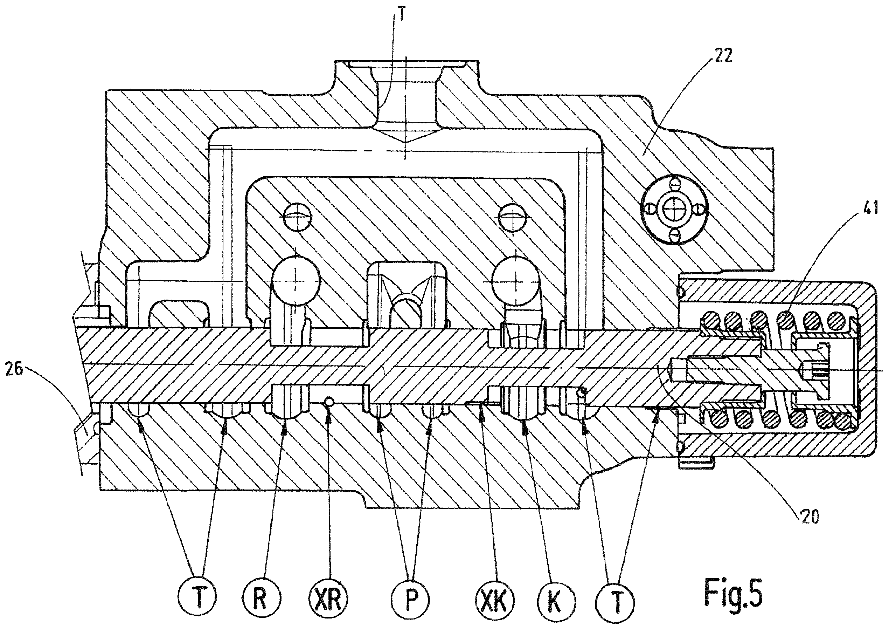

Die Fig. 3b und 5 verdeutlichen die aus der Mittelstellung um einen Schritt nach rechts verschobene Position +1. Bei dieser ist der Steueranschluss XK mit dem Rücklaufanschluss T verbunden, so dass das entsperrbare Rückschlagventil 44 gesperrt und damit der Kolbenraum 10 lediglich mit dem Speicher 12 verbunden ist. Der andere Steueranschluss XR ist jedoch, wie auch der Nutzanschluss R, druckversorgt, so dass dieser über das Drosselrückschlagventil 46 und das entsperrte Rückschlagventil 42 mit dem Ringraum 6 in Verbindung ist. Bei dieser Position +1 erfolgt daher das Laden des Ringraumes 6. Nach Maßgabe der Signale der Drucksensoren 58 und 60 kann durch den entsprechenden Ladevorgang die Federcharakteristik des Zylinders 2 an verschiedene Beladungs- oder Fahrzustände des Fahrzeugs angepasst werden.

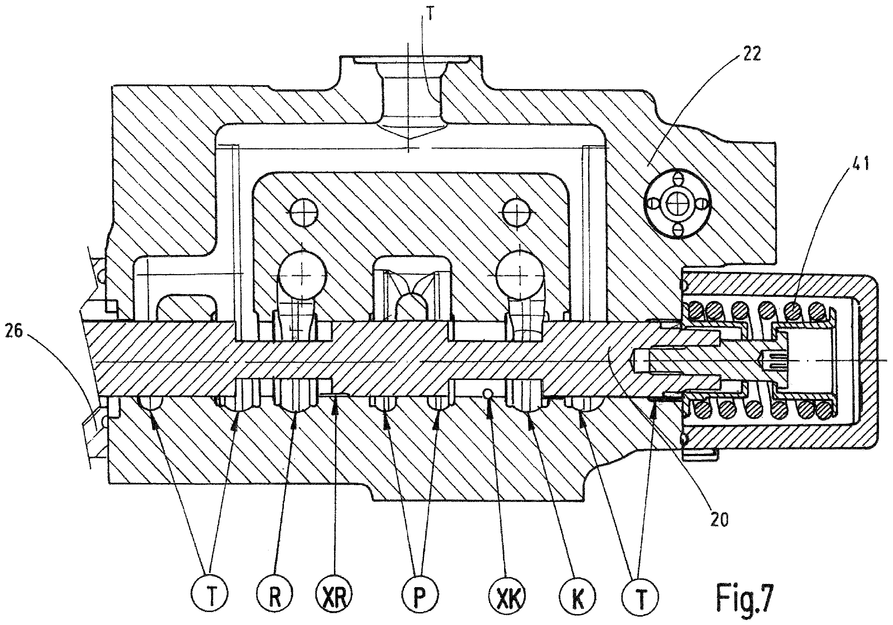

Die Fig. 3d und 7 verdeutlichen die aus der Mittelstellung um einen Schritt nach links verschobene Position -1, die dem Laden des Kolbenraumes 10 des Zylinders 2 entspricht. Hierbei sind der Nutzanschluss K und der Steueranschluss XK druckführend, so dass das entsperrbare Rückschlagventil 44 im zweiten Hauptzweig 16 entsperrt ist, während bei druckloser Steuerleitung XR und drucklosem Nutzanschluss R der erste Hauptzweig 14 gesperrt ist, so dass der Ringraum 6 des Zylinders 2 lediglich mit dem Druckspeicher 8 verbunden ist. Somit ist durch Laden des Kolbenraums 10, wie bei der Schaltposition +1, durch Laden des Kolbenraumes 10 die Federauslegung des Zylinders 2 an die Erfordernisse anpassbar.

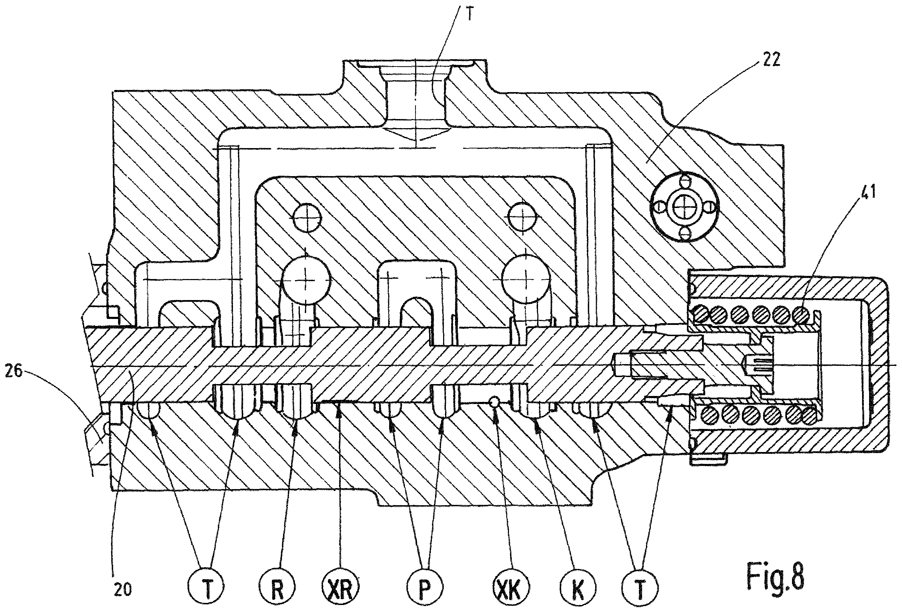

Schließlich zeigen die Fig. 3e und 8 die aus der Mittelstellung um zwei Schritte nach links verschobene Position -2. Bei dieser sind der Nutzanschluss K und beide Steueranschlüsse XR und XK druckversorgt. Beide Hauptzweige 14 und 16 sind dadurch über die entsperrten Rückschlagventile 42 und 44 freigeschaltet. Da bei dieser Position der Druckversorgungsanschluss P der Eingangsseite mit dem ausgangsseitigen Nutzanschluss K in Verbindung ist, ist über das Drosselrückschlagventil 48 und das entsperrte Rückschlagventil 44 der Kolbenraum 10 druckversorgt. Da der Ringraum 6 über das entsperrte Rückschlagventil 42 und das Drosselrückschlagventil 46 mit dem Nutzanschluss R in Verbindung ist, und dieser seinerseits zusammen mit dem Nutzanschluss K mit dem Rücklaufanschluss T in Verbindung ist, entspricht die Schaltposition -2 der Funktion "Heben". Bei der erfindungsgemäßen Steuervorrichtung sind sämtliche dieser Funktionen durch Ansteuern lediglich eines Motors 24 auslösbar.

## Patentansprüche

1. Steuervorrichtung zum Ansteuern eines hydraulischen Verbrauchers (2), bestehend aus einem hydraulischen Verbraucher, einer Ansteuerelektronik (MC), einer Sensoreinrichtung (58,60,62) und mindestens einem
Steuerventil (18) mit einem Steuerschieber (20), der mittels eines Elektromotors (24) betätigbar in einem Ventilgehäuse (22) längsverfahrbar geführt ist und der mittels der Ansteuerelektronik (MC) ansteuerbar ist, die Eingangssignale von der Sensoreinrichtung (58,
60, 62) erhält, die zumindest einen Betriebszustand des Verbrauchers (2) erfasst,
wobei auf der Eingangsseite des Ventilgehäuses (22) mindestens ein Druckversorgungs- (P) und ein Rücklaufanschluss (T) und auf der Ausgangsseite mindestens zwei Nutzanschlüsse (R, K) für den hydraulischen Verbraucher sowie zwei Steueranschlüsse (XR, XK) für den Anschluss hydraulisch entsperrbarer Ventile, insbesondere in Form von Rückschlagventilen (42, 44), vorhanden sind,
wobei ein Arbeitszylinder (2) als hydraulischer Verbraucher eine in einem Zylindergehäuse verfahrbare Kolben-Stangeneinheit aufweist, die das Zylindergehäuse in einen Ringraum (6) und einen Kolbenraum (10) unterteilt und dass der Ringraum (6) an einen der Nutzanschlüsse (R) und der Kolbenraum (10) an den anderen Nutzanschluss (K) fluidführend angeschlossen ist,
wobei in einer Mittelstellung von einem Energiespeicher, wie einer Druckfeder (41), unterstützt alle Anschlüsse auf der Ausgangsseite des Ventilgehäuses (22) von dem Druckversorgungsanschluss (P) abgesperrt sind,
wobei beidseitig neben der Mittelstellung der Steuerschieber (20) jeweils zwei weitere Steuerfunktionen ausübt, nämlich
- eine Schaltposition (+2) zum Einfahren der Kolbenstangeneinheit,
- eine Schaltposition (+1) zum Laden des Ringraums (6),
- eine Schaltposition (-1) zum Laden des Kolbenraums (10) und
- eine Schaltposition (-2) zum Ausfahren der Kolbenstangeneinheit; und
wobei der Ringraum (6) und der Kolbenraum (10) an jeweils einen
Hydrospeicher (8, 12) angeschlossen sind.

2. Steuervorrichtung nach Anspruch 1, **dadurch gekennzeichnet, dass** auf der Eingangsseite des Ventilgehäuses (22) zusätzlich zu den vorhandenen Anschlüssen ein Loadsensing-Anschluss (LS) vorhanden ist.

3. Steuervorrichtung nach Anspruch 1 oder 2, **dadurch gekennzeichnet, dass** der Elektromotor ein bürstenloser Gleichstrommotor (24) ist, der mittels eines Zahnstangentriebes (36, 38) den Steuerschieber (20) betätigt.

4. Steuervorrichtung nach einem der vorstehenden Ansprüche, **dadurch gekennzeichnet, dass** die Sensoreinrichtung zumindest einen Sensor aufweist, der
- der Wegerfassung (IS) und/oder
- der Geschwindigkeitserfassung und/oder
- der Druckwerterfassung (MK, MR) dient.

5. Steuervorrichtung nach Anspruch 4, **dadurch gekennzeichnet, dass** die Sensoreinrichtung zwei Drucksensoren (58, 60) aufweist, die einmal den Druck (MR) im Ringraum (6) und einmal den Druck (MK) im Kolbenraum (10) erfassen.

## Claims

1. Control device for controlling a hydraulic consumer (2), consisting of a hydraulic consumer, control electronics (MC), a sensor device (58, 60, 62) and at least one control valve (18) with a valve spool (20) which is guided so as to be longitudinally movable in a valve housing (22) such that it can be operated by means of an electric motor (24) and which can be controlled by means of the control electronics (MC) which receive input signals from the sensor device (58, 60, 62) that detects at least one operating state of the consumer (2),
wherein at least one pressure supply port (P) and one return port (T) are provided on the inlet side of the valve housing (22) and at least two work ports (R, K) for the hydraulic consumer and two control ports (XR, XK) for the connection of hydraulically unlockable valves, in particular in the form of check valves (42, 44), are provided on the outlet side,
wherein an operating cylinder (2), as the hydraulic consumer, has a piston rod unit which is displaceable in a cylinder housing, said piston rod unit dividing the cylinder housing into an annular space (6) and a piston chamber (10) and that the annular space (6) is connected to one of the work ports (R) and the piston chamber (10) is connected to the other work port (K) in a fluid-conducting manner,
wherein, in a central position, supported by an energy accumulator, such as a compression spring (41), all ports on the outlet side of the valve housing (22) are shut off by the pressure supply port (P),
wherein on both sides, in addition to the central position, the valve spool (20) performs two further control functions in each case, namely
- a switching position (+2) for retracting the piston rod unit,
- a switching position (+1) for loading the annular space (6),
- a switching position (-1) for loading the piston chamber (10) and
- a switching position (-2) for extending the piston rod unit; and
wherein the annular space (6) and the piston chamber (10) are each connected to a hydraulic accumulator (8, 12).

2. Control device according to claim 1, **characterised in that** a load-sensing port (LS) is present on the inlet side of the valve housing (22) in addition to the existing ports.

3. Control device according to claim 1 or 2, **characterised in that** the electric motor is a brushless direct-current motor (24) which operates the valve spool (20) by means of a rack-and-pinion drive (36, 38).

4. Control device according to one of the preceding claims, **characterised in that** the sensor device comprises at least one sensor which is used for
- position determination (IS) and/or
- speed determination and/or
- pressure value determination (MK, MR).

5. Control device according to claim 4, **characterised in that** the sensor device comprises two pressure sensors (58, 60) which determine the pressure (MR) in the annular space (6) on the one hand and the pressure (MK) in the piston chamber (10) on the other hand.

## Revendications

1. Dispositif de commande d'un consommateur (2) hydraulique constitué d'un consommateur hydraulique, d'une électronique (MC) de commande, d'un dispositif (58, 60, 62) à capteur et d'au moins une vanne (18) de commande ayant un tiroir (20) de commande, qui, en pouvant être actionné au moyen d'un moteur (24) électrique, peut être guidé, avec possibilité de se déplacer longitudinalement, dans un corps (22) de la vanne et qui, en pouvant être commandé au moyen de l'électronique (MC) de commande, reçoit les signaux d'entrée du dispositif (58, 60, 62) à capteur, qui détecte au moins un état de fonctionnement du consommateur (2),
dans lequel il y a, du côté de l'entrée du corps (22) de la vanne, au moins un raccord (P) d'alimentation en pression et un raccords (T) de retour et, du côté de la sortie, au moins deux raccords (R, K) utiles pour le consommateur hydraulique, ainsi que deux raccords (XR, XK) de commande de soupapes pouvant débloquer hydrauliquement le raccord, notamment sous la forme de clapets (42, 44) antiretour, dans lequel un vérin (2) de travail a, comme consommateur hydraulique, une unité piston-tige pouvant se déplacer dans un corps cylindrique, qui subdivise le corps cylindrique en un espace (6) annulaire et en un espace (10) de piston, et en ce que l'espace (6) annulaire est raccordé fluidiquement à l'un des raccords (R) utiles et l'espace (10) de piston à l'autre raccord (K) utile,
dans lequel, dans une position médiane, assistée par un accumulateur d'énergie, comme un ressort (41) de compression, tous les raccords, du côté de la sortie du corps (22) de la vanne, sont isolés du raccord (P) d'alimentation en pression,
dans lequel, de part et d'autre de la position médiane, le tiroir (20) de commande exerce respectivement deux autres fonctions de commande, à savoir
- une position de commutation (+2) pour faire rentrer l'unité piston-tige,
- une position de commutation (+1) pour charger l'espace (6) annulaire,
- une position de commutation (-1) pour charger l'espace (10) de piston et
- une position de commutation (-2) pour faire sortir l'unité piston-tige ; et
dans lequel l'espace (6) annulaire et l'espace (10) de piston sont raccordés à respectivement un accumulateur (8, 12) hydraulique.

2. Dispositif de commande suivant la revendication 1, **caractérisé en ce que**, du côté de l'entrée du corps (22) de la vanne, il y a, en plus des raccords présents, un raccord (LS) loadsensing.

3. Dispositif de commande suivant la revendication 1 ou 2, **caractérisé en ce que** le moteur électrique est un moteur (24) à courant continu sans balai, qui actionne le tiroir (20) de commande au moyen d'un entraînement (36, 38) à crémaillère.

4. Dispositif de commande suivant l'une des revendications précédentes, **caractérisé en ce que** le dispositif à capteur a au moins un capteur, qui sert
- à la détection (IS) de la course et/ou
- à la détection de la vitesse et/ou
- à la détection (MK, MR) de la valeur de la pression.

5. Dispositif de commande suivant la revendication 4, **caractérisé en ce que** le dispositif à capteur a deux capteurs (58, 60) de pression, dont l'un détecte la pression (MR) dans l'espace (6) annulaire et l'autre la pression (MK) dans l'espace (10) de piston.
